# NEUE EUROPÄISCHE PATENTSCHRIFT

(11) **EP 3 200 604 B2**
(45) Veröffentlichungstag und Bekanntmachung des Hinweises auf die Entscheidung über den Einspruch: **07.05.2025**
(45) Hinweis auf die Patenterteilung: 03.11.2021
(21) Anmeldenummer: 15767149.6
(22) Anmeldetag: 22.09.2015
(51) Int. Cl.: A23K 10/00, A23K 50/00, A23K 10/40, A23K 10/12, A23K 10/16, A23K 20/158, A23K 20/163, A23K 40/25, A23K 50/80, A23K 40/30

(54) **VERFAHREN ZUR HERSTELLUNG EINES FUTTERMITTELS**
METHOD FOR PREPARING AN ANIMAL FEED
PROCÉDÉ POUR LA PRÉPARATION D'UN ALIMENT POUR ANIMAUX

(30) Priorität: 02.10.2014 EP 14187467
(43) Veröffentlichungstag der Anmeldung: 09.08.2017
(73) Patentinhaber: Evonik Operations GmbH, 45128 Essen (DE)
(72) Erfinder: SILVA, Amelia Claudia, 63457 Hanau (DE); EILS, Stefan, 63584 Gründau (DE); PRIEFERT, Horst, 48346 Ostbevern (DE); RABE, Christian, 63762 Großostheim (DE)
(74) Vertreter: Evonik Patent Association
(86) Internationale Anmeldenummer: PCT/EP2015/071689
(87) Internationale Veröffentlichungsnummer: WO 2016/050556

(56) Entgegenhaltungen:
- WO-A1-2008/049512
- WO-A1-2014/122092
- WO-A2-2004/080196
- CN-A- 102 160 604
- CN-A- 102 687 810
- CN-A- 103 070 293
- CN-A- 103 385 390
- CN-A- 103 385 390
- CN-A- 104 082 581
- US-A- 5 518 918
- SCHOCH, CL , et al. (2020) Taxonomy Browser(Labyrinthulomycetes),https //www.ncbi.nlm.nih.gov/Taxonomy/Browser/wwwtax.cgi,accessed on 8 February 2022
- KISSINGER KARMA R.: "Use of proteins and oils from soybeans and microalgae to maximize fish meal and fish oil replacement in diets for juvenile giant grouper ( Epinephelus lanceolatus) and longfin yellowtail (Seriola rivoliana)", THESIS UNIVERSITY OF HAWAII, 1 December 2014 (2014-12-01), pages 1 - 120, XP055952082
- GARCIA-VEDRENNE ANA ELISA, GRONER MAYA, PAGE-KARJIAN ANNIE, SIEGMUND GREGOR-FAUSTO, SINGHAL SONIA, SZIKLAY JAMIE, ROBERTS STEVEN: "Development of Genomic Resources for a thraustochytrid Pathogen and Investigation of Temperature Influences on Gene Expression", PLOS ONE, vol. 8, no. 9, 17 September 2013 (2013-09-17), pages e74196, XP055952086, DOI: 10.1371/journal.pone.0074196
- "Handbook of Marine Microalgae", 1 January 2015, ISBN: 978-0-12-800776-1, article GUEDES A. CATARINA, SOUSA-PINTO ISABEL, MALCATA F. XAVIER: "Chapter 8 - Application of Microalgae Protein to Aquafeed", pages: 93 - 125, XP055952090, DOI: 10.1016/C2013-0-19117-9
- KIRON V., PHROMKUNTHONG W., HUNTLEY M., ARCHIBALD I., SCHEEMAKER G.: "Marine microalgae from biorefinery as a potential feed protein source for Atlantic salmon, common carp and whiteleg shrimp", AQUACULTURE NUTRITION, vol. 18, no. 5, 1 October 2012 (2012-10-01), GB , pages 521 - 531, XP055952091, ISSN: 1353-5773, DOI: 10.1111/j.1365-2095.2011.00923.x
- QIAO, H. ET AL.: "Effects of dietary fish oil replacement by microalgae raw materials on growth performance, body composition and fatty acid profile of juvenile flounder, Paralichthys olivaceus", AQUAC. NUTR., vol. 20, 26 June 2014 (2014-06-26), pages 646 - 653, XP055380637, DOI: 10.1111/anu.12127
- KIKUCHI KOTARO, FURUTA TAKESHI, HONDA HARUO: "Utilization of soybean meal as a protein source in the diet of juvenile Japanese flounder, Paralichthys olivaceus", SUISAN ZOSHOKU, vol. 42, no. 4, 1 December 1994 (1994-12-01), JP , pages 601 - 604, XP055952093, ISSN: 0371-4217, DOI: 10.11233/aquaculturesci1953.42.601
- Mitteilung 14187467.7, 07.07.15
- Netzschleimpilze, Wikipedia
- Jaseera und kaladharan, An overview of systematics, morphology,biodiversity and potential Utilisation of Thraustochytrids, 2020
- Yanyan Shi et al., Function of ORFC of the polyketide synthase gene cluster on fatty acid accumulation in Schizochytnum limacmum SR21
- BOEING PHIL: "Use of Spray-dried Schizochytrium sp. as a Partial Algal Replacement for Juvenile Bivalves ", JOURNAL OF SHELLFISH RESEARCH, ABSTRACTS, 1 February 1997 (1997-02-01), pages 284, XP093198256
- BOEING PHIL: "Use of Spray-dried Schizochytrium sp. as a Partial Algal Replacement for Juvenile Bivalves", 23 February 1999 (1999-02-23), XP093198258, Retrieved from the Internet <URL:https://web.archive.org/web/19990223184554/http://www.aquafauna.com/boebivlv.htm>
- SESHAGIRI RAGHUKUMAR: "Thraustochytrid Marine Protists: Production of PUFAs and Other Emerging Technologies", MARINE BIOTECHNOLOGY, SPRINGER-VERLAG, NE, vol. 10, no. 6, 20 August 2008 (2008-08-20), Ne , pages 631 - 640, XP019636709, ISSN: 1436-2236, DOI: 10.1007/s10126-008-9135-4
- Arrêté du ministre de l’agriculture et de la peche maritime n° 1490-13du 22 joumada 111434 (3 mai 2013)
- C.G. CARTER ET AL: "Potential of Thraustochytrids to Partially Replace Fish Oil in Atlantic Salmon Feeds", MARINE BIOTECHNOLOGY, vol. 5, no. 5, 1 October 2003 (2003-10-01), pages 480 - 492, XP055153989, ISSN: 1436-2228, DOI: 10.1007/s10126-002-0096-8

## Beschreibung

Die vorliegende Erfindung betrifft ein Verfahren zur Herstellung eines Futtermittels zur Anzucht von Tieren, bei welchem ein Futtermittel zum Einsatz kommt, das eine Labyrinthulea-Biomasse enthält.

Polyungesättigte Fettsäuren (PUFAs) stellen eine wichtige Komponente für die Ernährung von Mensch und Tier dar. Als Quelle für PUFAs wurde und wird vor allem Fisch verwendet. Der Fisch wird in der Regel in Form von Fischmehl oder Fischöl zur Verfütterung eingesetzt. Wegen der Verknappung des verfügbaren Fischbestandes wurde nach alternativen Lipid-Quellen gesucht. Als Alternative wurde hierbei vor allem pflanzliches Öl eingesetzt. Weiterhin wurde entdeckt, dass bestimmte Mikroben heterotroph PUFAs in großen Mengen produzieren.

Die PUFAs können anschließend aus den Zellen gewonnen werden oder aber die Zellen in Form von Biomasse direkt in Futter- oder Nahrungsmitteln eingesetzt werden.

CN 103 385 390 A beschreibt ein Futtermittel für Fische, enthaltend Fishmehl, Fischöl und *Schizochytrium limacinum*-Biomasse.

Miller et al. (Comparative Biochemistry and Physiology, Part A 148 (2007) 382-392) beschreiben den Ersatz von Fischöl durch Palmöl, Thraustochytrien-Öl oder einer Mischung aus Palmöl und Thraustochytrien-Öl. Sie beschreiben, dass der Ersatz von Fischöl durch Thraustochytrien-Öl keinen Einfluss auf das Wachstum von Lachsen hat, jedoch den Gehalt an DHA im Muskelgewebe des Fisches erhöht.

Carter et al. (Mar. Biotechnol. 5, 480-492, 2003) beschreiben, dass die Verfütterung einer Mischung aus Canolaöl und Thraustochytrien-Biomasse im Vergleich zu einer Verfütterung einer Mischung aus Canolaöl und Fischöl sowie im Vergleich zur Verfütterung von lediglich Canolaöl keinen Einfluss auf das Wachstum der Lachse oder die chemische Zusammensetzung der Lachse hat, im Vergleich zur Verfütterung der Mischung aus

Canolaöl und Fischöl jedoch eine höhere Mortalitätsrate der Fische zu beobachten war. Erfindungsgemäß wurde nun überraschenderweise gefunden, dass bei Substitution von Fischöl durch eine Aurantiochytrien-Biomasse ein besseres Wachstum erzielt werden konnte als bei Verwendung von Fischöl als alleiniger Quelle für PUFAs, wenn jeweils der gleiche Fettgehalt im Futtermittel eingestellt wird.

Erfindungsgemäß wurde weiterhin gefunden, dass bei Anzucht von Tieren mit einer Mischung aus marinem Öl und einer Labyrinthulea-Biomasse ein besseres Wachstum erzielt werden konnte als bei einer Anzucht mit entweder Fischöl alleine oder Labyrinthulea-Biomasse alleine, wenn jeweils der gleiche Fettgehalt im Futtermittel eingestellt wurde.

Aufgabe der vorliegenden Erfindung war es daher, ein Verfahren zur Herstellung eines Futtermittels zur Anzucht von Tieren bereit zu stellen, mit welchem das Wachstum der Tiere verbessert wird. Die Erfindung ist im beigefügten Anspruchssatz beschrieben.

Das Futtermittel enthält marines Öl, vorzugsweise Fischöl, und eine Labyrinthulea-Biomasse.

Das Futtermittel umfasst vorzugsweise eine Aurantiochytrien-Biomasse.

Bei den Aurantiochytrien handelt es sich hierbei vorzugsweise um die Spezies Aurantiochytrium limacinum, besonders bevorzugt um den Stamm Aurantiochytrium limacinum SR21 (IFO 32693).

Unter "marinem Öl" ist erfindungsgemäß allgemein ein Öl zu verstehen, das aus einem marinen Organismus, vorzugsweise aus einem marinen Tier, erhalten wurde. Neben Fischöl, das erfindungsgemäß bevorzugt ist, ist daneben auch Öl zu verstehen, das aus anderen marinen Organismen, insbesondere aus marinen Tieren, beispielsweise aus Krill, Muscheln, Kalmaren oder Schrimps, isoliert wurde. Vorzugsweise handelt es sich bei dem erfindungsgemäß einzusetzenden marinen Öl um Fischöl, insbesondere um ein fettes Öl aus Fischen, besonders bevorzugt um ein fettes Öl aus Fischen der Familien Engraulidae, Carangidae, Clupeidae, Osmeridae, Scombridae und/oder Ammodytidae.

Labyrinthulea werden auch Labyrinthulomycetes, Netzschleimpilze oder Schleimnetze genannt. Bei den Labyrinthulea handelt es sich vorzugsweise um solche aus der Familie der Thraustochytriaceae. Zu der Familie der Thraustochytriaceae gehören die Gattungen Althomia, Aplanochytrium, Elnia, Japonochytrium, Schizochytrium, Thraustochytrium, Aurantiochytrium, Oblongichytrium und Ulkenia. Besonders bevorzugt sind die Gattungen Thraustochytrium, Schizochytrium, Aurantiochytrium und Oblongichytrium, vor allem die Gattung Aurantiochytrium. Innerhalb der Gattung Aurantiochytrium ist erfindungsgemäß die Spezies Aurantiochytrium limacinum (früher auch Schizochytrium limacinum genannt) bevorzugt. Ganz besonders bevorzugt wird erfindungsgemäß der Stamm Aurantiochytrium limacinum SR21 (IFO 32693) eingesetzt.

Das marine Öl und die Labyrinthulea-Biomasse werden in dem Futtermittel, bezogen auf das Trockengewicht der Biomasse, vorzugsweise im Gewichtsverhältnis von 3:1 bis 1:6, insbesondere 2:1 bis 1:5, besonders bevorzugt 3:2 bis 1:4, insbesondere 1:1 bis 1:3, vor allem im Verhältnis von etwa 2:3, eingesetzt.

Die in der Biomasse enthaltenen Zellen zeichnen sich vorzugsweise dadurch aus, dass sie einen PUFA-Gehalt, von mindestens 20 Gew.-%, vorzugsweise mindestens 25 Gew.-%, insbesondere mindestens 30 Gew.-%, jeweils bezogen auf die Zelltrockenmasse, aufweisen, wobei vorzugsweise mindestens 50 Gew.-%, insbesondere mindestens 75 Gew.-% und in einer besonders bevorzugten Ausführungsform mindestens 90 Gew.-% der in der Zelle enthaltenen Lipide in Form von Triglyceriden vorliegen.

Bei der polyungesättigten Fettsäure (PUFA) handelt es sich erfindungsgemäß vorzugsweise um eine hochungesättigte Fettsäure (HUFA).

Unter polyungesättigten Fettsäuren (PUFAs) werden erfindungsgemäß Fettsäuren verstanden, die mindestens zwei, insbesondere mindestens drei, C-C-Doppelbindungen aufweisen. Unter den PUFAs sind erfindungsgemäß hochungesättigte Fettsäuren (HUFAs) bevorzugt. Unter HUFAs werden erfindungsgemäß Fettsäuren verstanden, die mindestens vier C-C-Doppelbindungen aufweisen.

Die PUFAs können in der Zelle in freier Form oder in gebundener Form vorliegen. Beispiele für das Vorliegen in gebundener Form sind Phospholipide und Ester der PUFAs, insbesondere Monoacyl-, Diacyl- und Triacylglyceride. In einer bevorzugten Ausführungsform liegt ein Großteil der PUFAs in Form von Triglyceriden vor, wobei vorzugsweise mindestens 50 Gew.-%, insbesondere mindestens 75 Gew.-% und in einer besonders bevorzugten Ausführungsform mindestens 90 Gew.-% der in der Zelle enthaltenen PUFAs in Form von Triglyceriden vorliegen.

Bevorzugte PUFAs stellen omega-3-Fettsäuren und omega-6-Fettsäuren dar, wobei omega-3-Fettsäuren besonders bevorzugt sind. Bevorzugte omega-3-Fettsäuren stellen hierbei die Eicosapentaensäure (EPA, 20:5ω-3), insbesondere die (5Z,8Z,11Z,14Z,17Z)-Eicosa-5,8,11,14,17-pentaensäure, und die Docosahexaensäure (DHA, 22:6ω-3), insbesondere die (4Z,7Z,10Z,13Z,16Z,19Z)-Docosa-4,7,10,13,16,19-hexaensäure, dar, wobei die Docosahexaensäure besonders bevorzugt ist.

Eine erfindungsgemäß besonders bevorzugte Biomasse enthält daher DHA in einer Menge von mindestens 20 Gew.-%, vorzugsweise mindestens 25 Gew.-%, insbesondere mindestens 30 Gew.-%, jeweils bezogen auf die Zelltrockenmasse, wobei vorzugsweise mindestens 50 Gew.-%, insbesondere mindestens 75 Gew.-% und in einer besonders bevorzugten Ausführungsform mindestens 90 Gew.-% der in der Zelle enthaltenen Lipide in Form von Triglyceriden vorliegen.

Das nach dem erfindungsgemäßen Verfahren hergestellte Futtermittel enthält als weiteren Inhaltsstoff Mehl von marinen Tieren vorzugsweise Fischmehl.

Unter "Mehl von marinen Tieren" ist erfindungsgemäß allgemein das Verarbeitungsprodukt von marinen Tieren, zu verstehen. Neben Fischmehl, das erfindungsgemäß bevorzugt eingesetzt wird, sind hierunter erfindungsgemäß insbesondere auch Krillmehl, Muschelmehl, Kalmarmehl oder Schrimpsschalen zu verstehen, die klassische Ersatzprodukte für Fischmehl darstellen. Besonders bevorzugt handelt es sich bei dem Mehl von marinen Organismen jedoch um Fischmehl.

Das Mehl von marinen Tieren, vorzugsweise Fischmehl und die Biomasse werden in dem Futtermittel, bezogen auf das Trockengewicht, vorzugsweise im Gewichtsverhältnis von 1:4 bis 8:1, insbesondere von 1:2 bis 6:1, besonders bevorzugt von 1:1 bis 3:1, insbesondere von 1:1 bis 2:1, vor allem im Verhältnis von etwa 5:3 eingesetzt.

Das marine Öl, insbesondere Öl mariner Tiere, vor allem Fischöl, ist in dem Futtermittel in Bezug auf das Mehl von marinen Organismen, insbesondere Mehl mariner Tiere, vor allem Fischmehl, vorzugsweise im Gewichtsverhältnis von 1:10 bis 2:1, insbesondere 1:5 bis 1:1, besonders bevorzugt 1:4 bis 1:2, enthalten. Besonders bevorzugt beträgt das Gewichtsverhältnis von marinem Öl, insbesondere Fischöl, zu Mehl von marinen Organismen etwa 1:3.

Die Biomasse wird, bezogen auf die Trockenmasse, in einer Menge von 2 bis 20 Gew.-%, vorzugsweise 3 bis 18 Gew.-%, insbesondere 5 bis 15 Gew.-%, vor allem 7 bis 11 Gew.-%, eingesetzt.

Weiterhin wird marines Öl, insbesondere Öl mariner Tiere, vor allem Fischöl, in einer Menge von 1 bis 12 Gew.-%, insbesondere 2 bis 8 Gew.-%, besonders bevorzugt 3 bis 7 Gew.-%, vor allem 4 bis 6 Gew.%, eingesetzt.

Weiterhin wird Mehl mariner Tiere, vor allem Fischmehl, eingesetzt, bezogen auf die Trockenmasse in einer Menge von 5 bis 25 Gew.-%, vorzugsweise 10 bis 20 Gew.-%, besonders bevorzugt 12 bis 18 Gew.-%.

Die zuvor genannten Komponenten Biomasse, marines Öl und Mehl mariner Tiere werden bei der Herstellung des Futtermittels in entsprechender Menge eingesetzt.

Die Summe aus Biomasse, marinem Öl, insbesondere Öl mariner Tiere, vorzugsweise Fischöl, und Mehl mariner Tiere, vor allem Fischmehl, macht in einer bevorzugten Ausführungsform vorzugsweise mindestens 15 Gew.-%, besonders bevorzugt mindestens 20 Gew.-%, insbesondere 20 bis 40 Gew.-%, vor allem mindestens 25 Gew.%, insbesondere 25 bis 35 Gew.-%, des Futtermittels aus.

Die anderen Futtermittelinhaltsstoffe sind vorzugsweise ausgewählt aus proteinhaltigen, kohlenhydrathaltigen, nukleinsäurehaltigen und lipidlöslichen Komponenten sowie gegebenenfalls weiteren fetthaltigen Komponenten und weiterhin aus anderen Zusatzstoffen wie Mineralien, Vitaminen, Pigmente und Aminosäuren. Daneben können neben Nährsubstanzen auch strukturgebende Substanzen enthalten sein, um etwa die Textur oder das Erscheinungsbild des Futtermittels zu verbessern. Weiterhin können beispielsweise auch Bindemittel eingesetzt werden, um die Konsistenz des Futtermittels zu beeinflussen. Eine bevorzugt eingesetzte Komponente, die sowohl eine Nährsubstanz als auch eine strukturgebende Substanz darstellt, ist Stärke.

Das Futtermittel weist vorzugsweise einen Gesamt-Proteingehalt von 30 bis 60 Gew.-%, vorzugsweise 35 bis 55 Gew.-%, insbesondere 40 bis 50 Gew.-%, auf.

Weiterhin weist das Futtermittel vorzugsweise einen Gesamt-Fettgehalt von 15 bis 35 Gew.-%, vorzugsweise 18 bis 32 Gew.-%, insbesondere 20 bis 30 Gew.-%, vor allem 22 bis 28 Gew.-%, auf.

Weiterhin weist das Futtermittel vorzugsweise einen Gesamt-Stärkegehalt von maximal 25 Gew.-%, insbesondere maximal 20 Gew.-%, vorzugsweise 5 bis 15 Gew.-%, besonders bevorzugt 7 bis 13 Gew.-%, auf.

Weiterhin weist das Futtermittel vorzugsweise einen Gehalt an polyungesättigten Fettsäuren (PUFAs) von 1 bis 12 Gew.-%, vorzugsweise 2 bis 10 Gew.-%, insbesondere 4 bis 8 Gew.-%, vor allem 5 bis 7 Gew.-%, auf.

Weiterhin weist das Futtermittel vorzugsweise einen Gehalt an omega-3-Fettsäuren von 0,1 bis 6,0 Gew.-%, vorzugsweise 0,5 bis 5,0 Gew.-%, insbesondere 1,0 bis 4,5 Gew.-%, vor allem 2,0 bis 4,0 Gew.-%, insbesondere 2,5 bis 3,5 Gew.-%, auf.

Weiterhin weist das Futtermittel vorzugsweise einen Gehalt an DHA von 0,05 bis 4,0 Gew.-%, vorzugsweise 0,25 bis 3,0 Gew.-%, insbesondere 0,5 bis 2,8 Gew.-%, vor allem 1,0 bis 2,5 Gew.-%, insbesondere 1,4 bis 2,0 Gew.-%, auf.

Ein nach dem erfindungsgemäßen Verfahren hergestelltes Futtermittel weist vorzugsweise folgende Eigenschaften auf:
- einen Gesamt-Proteingehalt von 30 bis 60 Gew.-%, vorzugsweise 35 bis 55 Gew.-%, insbesondere 40 bis 50 Gew.-%;
- einen Gesamt-Fettgehalt von 15 bis 35 Gew.-%, vorzugsweise 18 bis 32 Gew.-%, insbesondere 20 bis 30 Gew.-%, vor allem 22 bis 28 Gew.-%;
- einen Gesamt-Stärkegehalt von maximal 25 Gew.-%, insbesondere maximal 20 Gew.-%, vorzugsweise 5 bis 15 Gew.-%, besonders bevorzugt 7 bis 13 Gew.-%;
- einen Gehalt an polyungesättigten Fettsäuren (PUFAs) von 1 bis 12 Gew.-%, vorzugsweise 2 bis 10 Gew.-%, insbesondere 4 bis 8 Gew.-%, vor allem 5 bis 7 Gew.-%;
- einen Gehalt an omega-3-Fettsäuren von 0,1 bis 6 Gew.-%, vorzugsweise 0,5 bis 5 Gew.-%, insbesondere 1,0 bis 4,5 Gew.-%, vor allem 2,0 bis 4,0 Gew.-%, insbesondere 2,5 bis 3,5 Gew.-%;
- einen Gehalt an DHA von 0,05 bis 4,0 Gew.-%, vorzugsweise 0,25 bis 3,0 Gew.-%, insbesondere 0,5 bis 2,8 Gew.-%, vor allem 1,0 bis 2,5 Gew.-%, insbesondere 1,4 bis 2,0 Gew.-%.

Ein nach dem erfindungsgemäßen Verfahren hergestelltes Futtermittel weist daher vorzugsweise folgende Eigenschaften auf:
- einen Gesamt-Proteingehalt von 30 bis 60 Gew.-%, vorzugsweise 35 bis 55 Gew.-%, insbesondere 40 bis 50 Gew.-%,
- einen Gesamt-Fettgehalt von 15 bis 35 Gew.-%, vorzugsweise 18 bis 32 Gew.-%, insbesondere 20 bis 30 Gew.-%, vor allem 22 bis 28 Gew.-%;
- einen Gesamt-Stärkegehalt von maximal 25 Gew.-%, insbesondere maximal 20 Gew.-%, vorzugsweise 5 bis 15 Gew.-%, besonders bevorzugt 7 bis 13 Gew.-%;
- einen Gehalt an Labyrinthulea-Biomasse, insbesondere Thraustochytriaceae-Biomasse, von 2 bis 20 Gew.-%, vorzugsweise 3 bis 18 Gew.-%, insbesondere 5 bis 15 Gew.-%, vor allem 7 bis 11 Gew.-%;
- vorzugsweise einen Gehalt an marinem Öl, insbesondere Fischöl, von bis zu 12 Gew.-%, insbesondere 1 bis 10 Gew.-%, bevorzugt 2 bis 8 Gew.-%, besonders bevorzugt 3 bis 7 Gew.-%, vor allem 4 bis 6 Gew.-%;
- vorzugsweise einen Gehalt an polyungesättigten Fettsäuren (PUFAs) von 1 bis 12 Gew.-%, vorzugsweise 2 bis 10 Gew.-%, insbesondere 4 bis 8 Gew.-%, vor allem 5 bis 7 Gew.-%;
- vorzugsweise einen Gehalt an omega-3-Fettsäuren von 0,1 bis 6 Gew.-%, vorzugsweise 0,5 bis 5 Gew.-%, insbesondere 1,0 bis 4,5 Gew.-%, vor allem 2,0 bis 4,0 Gew.-%, insbesondere 2,5 bis 3,5 Gew.-%;
- vorzugsweise einen Gehalt an DHA von 0,05 bis 4,0 Gew.-%, vorzugsweise 0,25 bis 3,0 Gew.-%, insbesondere 0,5 bis 2,8 Gew.-%, vor allem 1,0 bis 2,5 Gew.-%, insbesondere 1,4 bis 2,0 Gew.-%.

Ein nach dem erfindungsgemäßen Verfahren hergestelltes Futtermittel weist daher vorzugsweise auch folgende Eigenschaften auf:
- einen Gesamt-Protein-Gehalt von 30 bis 60 Gew.-%, vorzugsweise 35 bis 55 Gew.-%, insbesondere 40 bis 50 Gew.-%,
- einen Gesamt-Fett-Gehalt von 15 bis 35 Gew.-%, vorzugsweise 18 bis 32 Gew.-%, insbesondere 20 bis 30 Gew.-%, vor allem 22 bis 28 Gew.-%;
- einen Gesamt-Stärke-Gehalt von maximal 25 Gew.-%, insbesondere maximal 20 Gew.-%, vorzugsweise 5 bis 15 Gew.-%, besonders bevorzugt 7 bis 13 Gew.-%;
- einen Gehalt an Aurantiochytrien-Biomasse, insbesondere Aurantiochytrium limacinum-Biomasse, vor allem Aurantiochytrium limacinum SR21-Biomasse, von 2 bis 20 Gew.-%, vorzugsweise 3 bis 18 Gew.-%, insbesondere 5 bis 15 Gew.-%, vor allem 7 bis 11 Gew.-%;
- vorzugsweise einen Gehalt an polyungesättigten Fettsäuren (PUFAs) von 1 bis 12 Gew.-%, vorzugsweise 2 bis 10 Gew.-%, insbesondere 4 bis 8 Gew.-%, vor allem 5 bis 7 Gew.-%;
- vorzugsweise einen Gehalt an omega-3-Fettsäuren von 0,1 bis 6 Gew.-%, vorzugsweise 0,5 bis 5 Gew.-%, insbesondere 1,0 bis 4,5 Gew.-%, vor allem 2,0 bis 4,0 Gew.-%, insbesondere 2,5 bis 3,5 Gew.-%;
- vorzugsweise einen Gehalt an DHA von 0,05 bis 4,0 Gew.-%, vorzugsweise 0,25 bis 3,0 Gew.-%, insbesondere 0,5 bis 2,8 Gew.-%, vor allem 1,0 bis 2,5 Gew.-%, insbesondere 1,4 bis 2,0 Gew.-%.

Ein nach dem erfindungsgemäßen Verfahren hergestelltes Futtermittel weist daher besonders bevorzugt folgende Eigenschaften auf:
- einen Gesamt-Protein-Gehalt von 40 bis 50 Gew.-%,
- einen Gesamt-Fett-Gehalt von 20 bis 30 Gew.-%;
- einen Gesamt-Stärke-Gehalt von maximal 20 Gew.-%, vorzugsweise 5 bis 15 Gew.-%;
- einen Gehalt an Aurantiochytrium limacinum SR21-Biomasse, von 5 bis 15 Gew.-%, vor allem 7 bis 11 Gew.-%;
- einen Gehalt an polyungesättigten Fettsäuren (PUFAs) von 2 bis 10 Gew.-%, insbesondere 4 bis 8 Gew.-%, vor allem 5 bis 7 Gew.-%;
- einen Gehalt an omega-3-Fettsäuren von 0,5 bis 5 Gew.-%, insbesondere 1,0 bis 4,5 Gew.-%, vor allem 2,0 bis 4,0 Gew.-%, insbesondere 2,5 bis 3,5 Gew.-%;
- einen Gehalt an DHA von 0,25 bis 3,0 Gew.-%, insbesondere 0,5 bis 2,8 Gew.-%, vor allem 1,0 bis 2,5 Gew.-%, insbesondere 1,4 bis 2,0 Gew.-%.

Als fetthaltige Komponente können erfindungsgemäß neben der erfindungsgemäß einzusetzenden Biomasse und dem gegebenenfalls eingesetzten marinen Öl weitere Fette, insbesondere Öle, tierischen als auch solche pflanzlichen Ursprungs eingesetzt werden.

Als weitere fetthaltige Komponente kommen erfindungsgemäß insbesondere Pflanzenöle in Betracht, beispielsweise Sojabohnenöl, Rapssamenöl, Sonnenblumenkernöl, Flachssamenöl oder Palmöl sowie Mischungen davon.

Vorzugsweise enthält ein nach dem erfindungsgemäßen Verfahren hergestelltes Futtermittel pflanzliche Öle in einer Menge von 3 bis 18 Gew.-%, insbesondere 5 bis 15 Gew.-%, vor allem 7 bis 13 Gew.-%. Diese werden erfindungsgemäß vorzugsweise nach der Extrusion auf das Extrudat aufgetragen, insbesondere durch Vakuumbeschichtung.

Als proteinhaltige Komponente können erfindungsgemäß beispielsweise Sojaprotein, Erbsenprotein, Weizengluten oder Maisgluten sowie Mischungen davon eingesetzt werden. Als kohlenhydrathaltige Komponente können beispielsweise Weizenmehl, Sonnenblumenmehl oder Sojamehl sowie Mischungen davon eingesetzt werden.

Die Biomasse kann sowohl in intakter Form als auch nach vorhergehendem Zellaufschluss zur Herstellung eines erfindungsgemäßen Futtermittels verwendet werden. Die Biomasse wird hierzu mit den weiteren Futtermittelinhaltsstoffen vermischt und anschließend zu dem erfindungsgemäßen Futtermittel verarbeitet.

Falls ein vorheriger Zellaufschluss durchgeführt wird, so wird dieser vorzugsweise wie in den Anmeldungen WO2014/122087 oder WO2014/122092 beschrieben durchgeführt.

Die Verarbeitung des Gemisches aus Biomasse und weiteren Futtermittelinhaltsstoffen erfolgt in einer bevorzugten Ausführungsform durch ein Extrusionsverfahren, um verkaufsfertige Portionen des Nahrungs- oder Futtermittels zu erhalten. Alternativ kann beispielsweise auch ein Pelletierverfahren eingesetzt werden.

Vor der Durchführung des Extrusionsverfahrens werden die Komponenten vorzugsweise innig miteinander vermischt. Dies geschieht vorzugsweise in einer Trommel, die mit Schaufeln ausgestattet ist. Bei diesem Mischungsschritt erfolgt in einer bevorzugten Ausführungsform eine Wasserdampfinjektion, insbesondere um die Quellung der vorzugsweise enthaltenen Stärke zu bewirken. Die Wasserdampfinjektion wird hierbei vorzugsweise bei einem Druck von 1 bis 5 bar, besonders bevorzugt bei einem Druck von 2 bis 4 bar, durchgeführt.

Die weiteren Futtermittelinhaltsstoffe werden vor dem Vermischen mit der Algen-Biomasse - soweit erforderlich - vorzugsweise zerkleinert, um sicherzustellen, dass bei dem Mischungsschritt ein homogenes Gemisch erhalten wird. Das Zerkleinern der weiteren Futtermittelinhaltsstoffe kann beispielsweise unter Verwendung einer Hammer-Mühle erfolgen.

Die Extrusion erfolgt weiterhin vorzugsweise bei einem Energieeintrag von 12 - 28 Wh/kg, insbesondere 14 - 26 Wh/kg, besonders bevorzugt 16 - 24 Wh/kg, vor allem 18 - 22 Wh/kg.

Im Extrusionsverfahren wird hierbei vorzugsweise ein Schnecken- oder Doppelschneckenextruder eingesetzt. Das Extrusionsverfahren wird vorzugsweise bei einer Temperatur von 80 - 220° C, insbesondere 80 - 130 °C, einem Druck von 10 - 40 Bar, und einer Wellenumlaufgeschwindigkeit von 100 - 1000 rpm, insbesondere 300 - 700 rpm, durchgeführt. Die Verweilzeit des eingebrachten Gemisches beträgt vorzugsweise 5 - 30 Sekunden, insbesondere 10 - 20 Sekunden.

Das erzeugte Extrudat hat vorzugsweise einen Durchmesser von 1 bis 14 mm, vorzugsweise 2 bis 12 mm, insbesondere 2 bis 6 mm, und weist vorzugsweise auch eine Länge von 1 bis 14 mm, vorzugsweise 2 bis 12 mm, insbesondere 2 bis 6 mm, auf. Die Länge des Extrudats wird durch Einsatz eines Schneidwerkzeugs während der Extrusion eingestellt. Die Länge des Extrudats wird vorzugsweise so gewählt, dass es dem Durchmesser des Extrudats in etwa entspricht. Der Durchmesser des Extrudats wird durch Wahl des Siebdurchmessers festgelegt.

Das Extrusionsverfahren kann gegebenenfalls einen Kompaktierungs- und/oder einen Kompressionsschritt umfassen.

Nach der Extrusion erfolgt vorzugsweise die Trocknung des Extrudats auf einen Feuchtigkeitsgehalt von maximal 5 Gew.-% sowie anschließend vorzugsweise die Beladung des Extrusionsprodukts mit Öl. Die Ölbeladung kann durch Einlegen des Extrudats in Öl oder Besprühen des Extrudats mit Öl erfolgen, erfolgt erfindungsgemäß jedoch vorzugsweise durch Vakuumbeschichtung.

Die nachträgliche Beladung des Extrudats mit Öl erfolgt erfindungsgemäß vorzugsweise soweit, dass sich im finalen Produkt ein Gesamt-Fettgehalt von 15 - 35 Gew.-%, vorzugsweise 20 - 30 Gew.-%, einstellt.

Das nach dem erfindungsgemäßen Verfahren hergestellte Futtermittel liegt vorzugsweise flockenförmig, kugelförmig oder tablettenförmig vor. Ein durch Extrusion erhältliches Futtermittel hat vorzugsweise einen Feuchtigkeitsgehalt von weniger als 10 Gew.-%, insbesondere weniger als 5 Gew.-%, besonders bevorzugt von 0,2 bis 4 Gew.-%.

Unter "Trockenmasse" ist erfindungsgemäß entsprechend vorzugsweise ein Produkt zu verstehen, die einen Feuchtigkeitsgehalt von unter 10 Gew.-%, insbesondere unter 5 Gew.-%, aufweist.

Ebenfalls beschrieben ist ein Verfahren zur Anzucht von Tieren, dadurch gekennzeichnet, dass diesen ein erfindungsgemäßes Futtermittel verabreicht wird.

Beschrieben wird insbesondere ein Verfahren zur Steigerung des Wachstums von Tieren, dadurch gekennzeichnet, dass diesen das nach dem erfindungsgemäßen Verfahren hergestellte Futtermittel verabreicht wird.

Weiter beschrieben ist insbesondere ebenso ein Verfahren zur Erhöhung des Anteils an omega-3-Fettsäuren, insbesondere DHA, im Muskelgewebe von Tieren, dadurch gekennzeichnet, dass diesen das nach dem erfindungsgemäßen Verfahren hergestellte Futtermittel verabreicht wird.

Verzugsweise wird das Futtermittel mindestens alle zwei Tage, vorzugsweise mindestens einmal täglich, verabreicht.

Bei den angezüchteten Tieren, die mit dem Futtermittel gefüttert werden, handelt es sich vorzugsweise um Geflügel, Schweine oder Rinder.

Besonders bevorzugt handelt es sich bei den angezüchteten Tieren jedoch um marine Tiere, besonders bevorzugt um Flossenfische oder Crustaceen. Hierzu zählen insbesondere Karpfen, Tilapia, Welse, Thunfisch, Lachs, Forellen, Baramundi, Brassen, Barsche, Kabeljau, Schrimps, Hummer, Krabben, Garnelen und Krebse. Besonders bevorzugt handelt es sich bei den angezüchteten Tieren um Lachse. Bevorzugte Lachsarten stellen hierbei der Atlantische Lachs, der Rotlachs, der Masu-Lachs, der Königslachs, der Ketalachs, der Silberlachs, der Donaulachs, der Pazifische Lachs und der Buckellachs dar.

Bei den angezüchteten Tieren kann es sich insbesondere auch um Fische handeln, die anschließend zu Fischmehl oder Fischöl verarbeitet werden. Bei den Fischen handelt es sich hierbei vorzugsweise um Hering, Pollack, Menhaden, Anchovis, Kapelan oder Kabeljau. Das so erhaltene Fischmehl oder Fischöl kann wiederum in der Aquakultur zur Zucht von Speisefischen bzw. Crustaceen eingesetzt werden.

Es kann sich bei den angezüchteten Tieren jedoch auch um Kleinlebewesen handeln, die in der Aquakultur als Futtermittel eingesetzt werden. Bei diesen Kleinlebewesen kann es sich beispielsweise um Nematoden, Crustaceen oder Rotiferen handeln.

Die Anzucht der marinen Tiere kann in Teichen, Tanks, Becken oder auch in abgegrenzten Arealen im Meer oder in Seen, hierbei insbesondere in Käfigen oder Netzpferchen, erfolgen. Die Anzucht kann dazu dienen, den fertigen Speisefisch heranzuzüchten, jedoch auch eingesetzt werden, um Jungfische heranzuzüchten, die anschließend freigesetzt werden, um den Wildfischbestand aufzustocken.

Bei der Lachszucht erfolgt vorzugsweise zunächst die Heranzucht bis zum Junglachs in Süßwasser-Tanks oder künstlichen Wasserströmen und anschließend die weitere Zucht im Meer in schwimmenden Käfigen bzw. Netzpferchen, die vorzugsweise in Buchten oder Fjorden verankert sind.

Bei dem nach dem erfindungsgemäßen Verfahren hergestellten Futtermittel handelt es sich entsprechend vorzugsweise um ein Futtermittel zum Einsatz bei der Anzucht der zuvor genannten Tiere.

Die erfindungsgemäß eingesetzte Labyrinthulea-Biomasse, insbesondere die Aurantiochytrien-Biomasse, ist vorzugsweise das Produkt eines fermentativen Kultivierungsverfahrens und wird entsprechend vorzugsweise ausgehend von einer durch Fermentation dieser Algen erhaltenen Fermentationsbrühe gewonnen. Die erfindungsgemäß zur Gewinnung der Algen-Biomasse einzusetzende Fermentationsbrühe umfasst neben der zu trocknenden Biomasse vorzugsweise weitere Bestandteile des Fermentationsmediums. Bei diesen Bestandteilen kann es sich insbesondere um Salze, Antischaummittel und nicht umgesetzte Kohlenstoffquelle und/oder Stickstoffquelle handeln. Bei der Trocknung entsteht vorzugsweise ein Produkt, das einen Zellgehalt von mindestens 60 Gew.-%, vorzugsweise mindestens 65 Gew.-%, insbesondere mindestens 70 oder 80 Gew.-%, aufweist, wobei als weitere Bestandteile zugesetzte Antibackmittel, wie beispielsweise Kieselsäuren, und gegebenenfalls weitere Bestandteile des Fermentationsmediums sowie gegebenenfalls teilweise aus den Zellen freigesetzte Komponenten enthalten sind. Die weiteren Bestandteile der Fermentationsbrühe können gegebenenfalls vor der Trocknung der Biomasse teilweise abgetrennt werden, beispielsweise durch Fest-Flüssig-Trennverfahren, so dass bei der Trocknung ein Produkt entsteht, dass diese weiteren Komponenten der Fermentationsbrühe, insbesondere Salze, vorzugsweise in einer Menge von maximal 20 Gew.-%, insbesondere maximal 15, 10 oder 5 Gew.-%, enthält.

Verfahren zur Herstellung erfindungsgemäß einsetzbarer Biomassen sind im Stand der Technik ausführlich beschrieben (siehe z.B. WO91/07498, WO94/08467, WO97/37032, WO97/36996, WO01/54510). Die Herstellung erfolgt in der Regel dadurch, dass Zellen in Anwesenheit einer Kohlenstoffquelle und einer Stickstoffquelle in einem Fermenter kultiviert werden. Es können hierbei Biomasse-Dichten von mehr als 100 Gramm pro Liter und Produktionsraten von mehr als 0,5 Gramm Lipid pro Liter pro Stunde erreicht werden. Das Verfahren wird vorzugsweise als sogenanntes Fed-Batch-Verfahren durchgeführt, d.h. dass die Kohlenstoff- und Stickstoffquellen inkrementell während der Fermentation zugeführt werden. Die Lipid-Produktion kann nach Erreichen der gewünschten Biomasse durch unterschiedliche Maßnahmen induziert werden, beispielsweise durch Limitierung der Stickstoffquelle, der Kohlenstoffquelle oder des Sauerstoffgehalts oder Kombinationen davon.

Die Fermentation der Zellen erfolgt vorzugsweise in einem Medium mit niedriger Salinität, insbesondere um Korrosion zu verhindern. Dies kann dadurch erreicht werden, dass anstelle von Natriumchlorid chlor-freie Natriumsalze, wie beispielsweise Natriumsulfat, Natriumcarbonat, Natriumhydrogencarbonat oder Sodaasche, als Natriumquelle verwendet werden. Vorzugsweise wird Chlorid in Mengen von weniger als 3 g/l, insbesondere weniger als 500 mg/l, besonders bevorzugt weniger als 100 mg/l, bei der Fermentation eingesetzt.

Als Kohlenstoffquelle kommen sowohl alkoholische als auch nicht-alkoholische Kohlenstoffquellen in Betracht. Beispiele für alkoholische Kohlenstoffquellen sind Methanol, Ethanol und Isopropanol. Beispiele für nicht-alkoholische Kohlenstoffquellen sind Fructose, Glucose, Saccharose, Molassen, Stärke und Maissirup.

Als Stickstoffquelle kommen sowohl anorganische als auch organische Stickstoffquellen in Betracht. Beispiele für anorganische Stickstoffquellen sind Nitrate und Ammoniumsalze, insbesondere Ammoniumsulfat und Ammoniumhydroxid. Beispiele für organische Stickstoffquellen sind Aminosäuren, insbesondere Glutamat, und Harnstoff.

Zusätzlich können auch anorganische oder organische Phosphorverbindungen und/oder bekannte wachstumsstimulierende Stoffe, wie etwa Hefeextrakt oder Maisquellwasser, hinzugegeben werden, um die Fermentation positiv zu beeinflussen.

In einer bevorzugten Ausführungsform wird die Menge an während der Fermentation zugegebenem Sulfat so gewählt, dass sich in der resultierenden Biomasse in Bezug auf die Trockenmasse ein Sulfat-Gehalt von mindestens 25 g/kg, insbesondere 25 bis 60 g/kg, vorzugsweise 25 bis 50, 25 bis 40 oder 25 bis 35 g/kg, einstellt.

Die Einstellung des Sulfat-Gehalts in der resultierenden Biomasse kann auf unterschiedliche Weise erfolgen.

Beispielsweise kann in einem sogenannten Batch-Verfahren die benötigte Menge an Sulfat bereits zu Beginn vollständig vorgelegt werden. Die Menge an benötigtem Sulfat lässt sich einfach berechnen, da die zur Bildung der Biomasse eingesetzten Zellen das Sulfat fast vollständig assimilieren.

Bei Anwendung eines sogenannten Fed-Batch-Verfahrens kann alternativ die Menge an benötigten Sulfat im Verlauf der Fermentation zudosiert werden oder entsprechend ein Teil des Sulfats vorgelegt und der Rest im Verlauf der Fermentation zudosiert werden.

Insbesondere dann, wenn sich im Verlauf der Fermentation herausstellt, dass die Menge an produzierter Biomasse den ursprünglich kalkulierten Wert übertrifft, kann durch nachträgliches Zudosieren von Sulfat sichergestellt werden, dass die resultierenden Biomasse die bevorzugte Menge an Sulfat enthält.

Als Sulfat-Salz wird vorzugsweise Natriumsulfat, Ammoniumsulfat oder Magnesiumsulfat sowie Mischungen davon eingesetzt.

Der Chlorid-Gehalt liegt während der Fermentation, in Bezug auf das flüssige Fermentationsmedium einschließlich der enthaltenen Biomasse, vorzugsweise stets unter 3 g/kg, insbesondere unter 1 g/kg, besonders bevorzugt unter 400 mg/kg Fermentationsmedium.

Neben Sulfaten und gegebenenfalls eingesetzten Chloriden können bei der Fermentation gegebenenfalls auch weitere Salze, insbesondere ausgewählt aus Natriumcarbonat, Natriumhydrogencarbonat, Sodaasche oder anorganischen Phosphorverbindungen, eingesetzt werden.

Sofern weitere Salze eingesetzt werden, werden diese vorzugsweise in einer Menge eingesetzt, so dass jedes einzelne während der Fermentation, in Bezug auf das flüssige Fermentationsmedium einschließlich der enthaltenen Biomasse, jeweils in einer Menge von weniger als 10 g/kg, insbesondere weniger als 5 g/kg, besonders bevorzugt weniger als 3 g/kg im Fermentationsmedium vorliegt.

Der Gesamtsalzgehalt im Fermentationsmedium einschließlich der enthaltenen Biomasse liegt erfindungsgemäß vorzugsweise im Verlauf der gesamten Fermentation stets unter 35 g/kg, insbesondere unter 30 g/kg. Besonders bevorzugt liegt der Gesamtsalzgehalt während der gesamten Fermentation, in Bezug auf das flüssige Fermentationsmedium einschließlich der enthaltenen Biomasse, zwischen 10 und 35 kg/g, insbesondere zwischen 12 und 30 g/kg.

Der Sulfat-Gehalt im Fermentationsmedium einschließlich der enthaltenen Biomasse liegt erfindungsgemäß vorzugsweise im Verlauf der gesamten Fermentation stets zwischen 5 und 16 g/kg.

Unter "Sulfat-Gehalt" ist erfindungsgemäß der Gesamtgehalt an Sulfat, also der Gehalt an freiem und gebundenem, insbesondere organisch gebundenem, Sulfat zu verstehen. Es ist davon auszugehen, dass der Großteil des in der Biomasse enthaltenen Sulfats als Bestandteil von Exopolysacchariden vorliegt, die an der Ausbildung der Zellwand der Mikroorganismen beteiligt sind.

Die Bestimmung des Sulfat-Gehalts erfolgt erfindungsgemäß vorzugsweise durch Ermittlung des Schwefel-Gehalts der erhaltenen Biomasse, da der Großteil des in der Biomasse enthaltenen Schwefels auf das enthaltene Sulfat zurückzuführen ist. Schwefel, der auf andere Quellen zurückzuführen ist, ist aufgrund der Menge des enthaltenen Sulfats zu vernachlässigen. Aus der Menge des ermittelten Schwefels kann somit ohne Weiteres die Menge an enthaltenem Sulfat ermittelt werden.

Der Schwefel-Gehalt der Biomasse wird hierbei vorzugsweise durch Elementaranalyse gemäß DIN EN ISO 11885 bestimmt. Für die Analyse des Schwefelgehalts der Biomasse werden entsprechende Aliquote der Probe vor der Analyse vorzugsweise mit Salpetersäure und Wasserstoffperoxid bei 240°C unter Druck aufgeschlossen, um die freie Zugänglichkeit des enthaltenen Schwefels sicherzustellen.

Erfindungsgemäß wird daher vorzugsweise zur Herstellung des Futtermittels eine PUFAs enthaltende Biomasse eingesetzt, die sich dadurch auszeichnet, dass sich in dieser durch Elementaranlyse gemäß DIN EN ISO 11885 ein Schwefel-Gehalt von 8 bis 20 g/kg, bezogen auf die Trockenmasse, nachweisen lässt. Der Schwefel-Gehalt in der Biomasse beträgt hierbei vorzugsweise 8 bis 17 g/kg, insbesondere 8 bis 14 g/kg, besonders bevorzugt 8 bis 12 g/kg, jeweils bezogen auf die Trockenmasse.

Der Phosphor-Gehalt erfindungsgemäß bevorzugt eingesetzter Biomassen beträgt erfindungsgemäß, in Bezug auf die Trockenmasse, vorzugsweise 1 bis 6 g/kg, insbesondere 2 bis 5 g/kg. Der Phosphor-Gehalt wird vorzugsweise ebenfalls durch Elementaranalyse gemäß DIN EN ISO 11885 ermittelt.

Die Fermentation der Zellen erfolgt vorzugsweise bei einem pH-Wert von 3 bis 11, insbesondere 4 bis 10, sowie vorzugsweise bei einer Temperatur von mindestens 20°C, insbesondere 20 bis 40°C, besonders bevorzugt mindestens 30 °C. Ein typisches Fermentationsverfahren dauert bis zu etwa 100 Stunden.

Die Zellen werden erfindungsgemäß vorzugsweise bis zu einer Biomassendichte von mindestens 50, 60 oder 70 g/l, insbesondere mindestens 80 oder 90 g/l, besonders bevorzugt mindestens 100 g/l, fermentiert. Die Angaben beziehen sich hierbei auf den Gehalt an Bio-Trockenmasse in Bezug auf das Gesamtvolumen der Fermentationsbrühe nach Beendigung der Fermentation. Der Gehalt an Bio-Trockenmasse wird bestimmt durch Abfiltrieren der Biomasse aus der Fermentationsbrühe, anschließendes Waschen mit Wasser, danach vollständige Trocknung - beispielsweise in der Mikrowelle - und schließlich Feststellung des Trockengewichts.

Nach Beendigung der Fermentation erfolgt die Ernte der Biomasse. Vorzugsweise erfolgt nach der Ernte der Biomasse oder gegebenenfalls auch schon kurz vor der Ernte der Biomasse eine Pasteurisierung der Zellen, um die Zellen abzutöten und Enzyme, die den Abbau der Lipide befördern könnten, zu inaktivieren. Die Pasteurisierung erfolgt vorzugsweise durch Erhitzen der Biomasse auf eine Temperatur von 50 bis 121 °C für eine Dauer von 5 bis 60 Minuten.

Ebenso erfolgt nach der Ernte der Biomasse oder gegebenenfalls auch schon kurz vor der Ernte der Biomasse vorzugsweise die Zugabe von Antioxidantien, um den in der Biomasse enthaltenen Wertstoff vor oxidativem Abbau zu schützen. Bevorzugte Antioxidantien stellen hierbei BHT, BHA, TBHA, Ethoxyquin, beta-Carotin, Vitamin E und Vitamin C dar. Das Antioxidans wird, sofern eingesetzt, vorzugsweise in einer Menge von 0,01 bis 2 Gew.-% hinzugegeben.

Gegebenenfalls kann nun, vor der eigentlichen Trocknung, bereits ein Teil des Fermentationsmediums von der Biomasse abgetrennt und damit der Feststoffanteil erhöht werden. Dies kann insbesondere durch Zentrifugation, Flotation, Filtration, insbesondere Ultra- oder Mikrofiltration, Dekantieren und/oder Lösungsmittelverdampfung erfolgen. Die Lösungsmittelverdampfung erfolgt hierbei vorzugsweise unter Einsatz eines Rotationsverdampfers, eines Dünnschichtverdampfers oder eines Fallfilmverdampfers in einem einstufigen oder mehrstufigen Prozess. Alternativ kommt beispielsweise auch die Umkehrosmose zwecks Einengung der Fermentationsbrühe in Betracht.

In diesem ersten optionalen, aber bevorzugt durchgeführten, Schritt erfolgt vorzugsweise eine Einengung der Fermentationsbrühe auf einen Feststoffgehalt von mindestens 10 oder 15 Gew.-%, vorzugsweise von mindestens 20 oder 25 Gew.-%, insbesondere 10 bis 50 oder 15 bis 45 Gew.-%, besonders bevorzugt 15 bis 40 Gew.-% oder 20 bis 40 Gew.-%.

Nach der optionalen Einengung der Fermentationsbrühe erfolgt die Trocknung der Biomasse, vorzugsweise durch thermische Trocknung, besonders bevorzugt durch Sprühtrocknung, insbesondere Düsensprühtrocknung, Sprühgranulation, Wirbelschichtgranulation, insbesondere Fließbettgranulation, oder in einem Trommeltrockner.

Alternativ kann die Biomasse auch direkt nach der Ernte ohne vorherige Einengung dem Trocknungsschritt unterzogen werden, insbesondere dann, wenn die erhaltene Fermentationsbrühe bereits einen hohen Feststoffgehalt, vorzugsweise wie zuvor angegeben, aufweist.

Durch die Trocknung der Biomasse wird diese vorzugsweise auf eine Restfeuchte von maximal 10 Gew.-%, insbesondere 0 bis 10 Gew.-%, besonders bevorzugt maximal 8 Gew.-%, insbesondere 0,5 bis 8 Gew.-%, vor allem maximal 6 oder 5 Gew.-%, insbesondere 0,5 bis 6 oder 0,5 bis 5 Gew.-%, getrocknet.

Die Trocknung der Biomasse erfolgt in einer erfindungsgemäß besonders bevorzugten Ausführungsform in einem Wirbelschichtgranulationsverfahren oder einem Düsensprühtrocknungsverfahren, wie beispielsweise in EP13176661.0 beschrieben.

Der Biomasse kann während der Trocknung gegebenenfalls Kieselsäure als Antibackmittel zugesetzt werden, um sie in einen besser handhabbaren Zustand zu überführen. Die Biomasse enthaltende Fermentationsbrühe sowie die Kieselsäure werden hierzu vorzugsweise in die jeweilige Trocknungszone eingesprüht. Alternativ wird die Biomasse vorzugsweise erst nach der Trocknung mit der Kieselsäure vermischt. Es wird diesbezüglich insbesondere auch auf die Patentanmeldung EP13187631.0 verwiesen.

In einer bevorzugten Ausführungsform weist eine erfindungsgemäß einzusetzende Biomasse nach der Trocknung eine Konzentration an Kieselsäure, insbesondere hydrophiler oder hydrophober Kieselsäure, von 0,2 bis 10 Gew.-%, insbesondere 0,5 bis 5 Gew.-%, vor allem 0,5 bis 2 Gew.-%, auf.

Durch die Trocknung wird vorzugweise ein rieselfähiges, feinteiliges oder grobkörniges Produkt, vorzugsweise Granulat, erhalten. Gegebenenfalls kann aus dem erhaltenen Granulat durch Sieben oder Staubabtrennung ein Produkt mit der gewünschten Korngröße erhalten werden.

Sofern ein rieselfähiges feinteiliges Pulver erhalten wurde, kann dieses gegebenenfalls durch geeignete Kompaktier- oder Granulierverfahren in ein grobkörniges, gut rieselfähiges, lagerbares und weitgehend staubfreies Produkt überführt werden.

Bei dieser anschließenden Granulation oder Kompaktierung können gegebenenfalls übliche organische oder anorganische Hilfsstoffe beziehungsweise Träger wie Stärke, Gelatine, Cellulosederivate oder ähnliche Stoffe, die üblicherweise in der Lebensmittel- oder Futterverarbeitung als Binde-, Gelier- oder Verdickungsmittel Verwendung finden, eingesetzt werden.

Unter "rieselfähig" ist erfindungsgemäß ein Pulver zu verstehen, das aus einer Serie von Glasauslaufgefäßen mit verschieden großen Auslassöffnungen mindestens aus dem Gefäß mit der Öffnung 5 Millimeter ungehindert auslaufen kann (Klein: Seifen, Öle, Fette, Wachse 94, 12 (1968)).

Unter "feinteilig" ist erfindungsgemäß ein Pulver mit einem überwiegenden Anteil (> 50 %) einer Korngröße von 20 bis 100 Mikrometer Durchmesser zu verstehen.

Unter "grobkörnig" ist erfindungsgemäß ein Pulver mit einem überwiegenden Anteil (>50 %) einer Korngröße von 100 bis 2500 Mikrometer Durchmesser zu verstehen.

Unter "staubfrei" ist erfindungsgemäß ein Pulver zu verstehen, das lediglich geringe Anteile (< 10 %, vorzugsweise < 5 %) an Korngrößen unter 100 Mikrometer enthält.

Die Bestimmung der Korn- bzw. Teilchengrößen erfolgt erfindungsgemäß vorzugsweise durch Methoden der Laserbeugungsspektrometrie. Die anzuwendenden Methoden sind im Lehrbuch "Teilchengrößenmessung in der Laborpraxis" von R.H. Müller und R. Schuhmann, Wissenschaftliche Verlagsgesellschaft Stuttgart (1996) sowie im Lehrbuch "Introduction to Particle Technology" von M. Rhodes, Verlag Wiley & Sons (1998) beschrieben. Sofern unterschiedliche Methoden anwendbar sind, wird bevorzugt die zuerst genannte anwendbare Methode aus dem Lehrbuch von R.H. Müller und R. Schuhmann zur Teilchengrößenmessung angewendet.

Die durch Trocknung erhaltene Biomasse besitzt vorzugsweise einen Anteil von mindestens 80 Gew.-%, insbesondere mindestens 90 Gew.-%, besonders bevorzugt mindestens 95 Gew.-%, an Partikeln mit einer Korngröße von 100 bis 3500 Mikrometern, vorzugsweise 100 bis 3000 Mikrometern, vor allem 100 bis 2500 Mikrometern.

Die erfindungsgemäß eingesetzten Produkte eines Wirbelschichtgranulationsverfahrens besitzen hierbei vorzugsweise einen Anteil von mindestens 80 Gew.-%, insbesondere mindestens 90 Gew.-%, besonders bevorzugt mindestens 95 Gew.-%, an Partikeln mit einer Korngröße von 200 bis 3500 Mikrometern, vorzugsweise 300 bis 3000 Mikrometern, vor allem 500 bis 2500 Mikrometern.

Die erfindungsgemäß eingesetzten Produkte eines Sprühtrocknungsverfahrens besitzen hingegen vorzugsweise einen Anteil von mindestens 80 Gew.-%, insbesondere mindestens 90 Gew.-%, besonders bevorzugt mindestens 95 Gew.-%, an Partikeln mit einer Korngröße von 100 bis 500 Mikrometern, vorzugsweise 100 bis 400 Mikrometern, vor allem 100 bis 300 Mikrometern.

Die erfindungsgemäß eingesetzten Produkte eines Sprühtrocknungsverfahrens und anschließenden Granulationsverfahrens besitzen vorzugsweise einen Anteil von mindestens 80 Gew.-%, insbesondere mindestens 90 Gew.-%, besonders bevorzugt mindestens 95 Gew.-%, an Partikeln mit einer Korngröße von 100 bis 1000 Mikrometern.

Der Anteil an Staub, d.h. Teilchen mit einer Korngröße von kleiner 100 Mikrometern, liegt in der eingesetzten Biomasse vorzugsweise bei maximal 10 Gew.-%, insbesondere maximal 8 Gew.-%, besonders bevorzugt maximal 5 Gew.-%, vor allem maximal 3 Gew.-%.

Das Schüttgewicht der eingesetzten Biomasse liegt vorzugsweise bei 400 bis 800 kg/m³, besonders bevorzugt bei 450 bis 700 kg/m³.

### Ausführungsbeispiele

### Beispiel 1: Herstellung der Biomasse

### Beispiel 1: Herstellung der Biomasse durch Fermentation von Aurantiochytrium limacinum SR21 in einem Medium mit hohem Sulfat-Gehalt und anschließende Trocknung der Biomasse

Die Kultivierung der Zellen erfolgte für ca. 75 h in einem Zulaufverfahren unter Verwendung eines Stahlfermenters mit einem Fermentervolumen von 2 Litern bei einer Gesamt-Startmasse von 712 g und einer erreichten Gesamt-Endmasse von 1,3 - 1,5 kg. Während des Verfahrens wurde eine Glucose-Lösung (570 g/kg Glucose) zudosiert ("Fed-batch Verfahren")

Die Zusammensetzung des Startmediums war wie folgt:
Medium 1: 20 g/kg Glukose; 4 g/kg Hefe-Extrakt; 16 g/kg Natriumsulfat; 2 g/kg Ammoniumsulfat; 2,46 g/kg Magnesiumsulfat (Heptahydrat); 0,45 g/kg Kaliumchlorid; 4,5 g/kg Kaliumdihydrogenphosphat; 0,1 g/kg Thiamin (HCl); 5 g/kg Spurenelementlösung.

Die Zusammensetzung der Spurenelementlösung war wie folgt: 35 g/kg Salzsäure (37%); 1,86 g/kg Manganchlorid (Tetrahydrat); 1,82 g/kg Zinksulfat (Heptahydrat); 0,818 g/kg Natrium-EDTA; 0,29 g/kg Borsäure; 0,24 g/kg Natriummolybdat (Dihydrat); 4,58 g/kg Kalziumchlorid (Dihydrat); 17,33 g/kg Eisensulfat (Heptahydrat); 0,15 g/kg Kupferchlorid (Dihydrat).

Die Kultivierung erfolgte unter folgenden Bedingungen: Kultivierungstemperatur 28°C; Belüftungsrate 0,5 vvm, Rührergeschwindigkeit 600 - 1950 rpm, Kontrolle das pH-Werts in der Wachstumsphase bei 4,5 mit Hilfe von Ammoniakwasser (25% v/v).

Nach der Kultivierung wurden die Fermentationsbrühen für 20 Minuten auf 60°C erhitzt um eine weitere Aktivität der Zellen zu unterbinden.

Anschließend erfolgte eine zweistufige Trocknung der Biomasse: Zunächst wurde die Fermentationsbrühe durch Verdampfung auf eine Trockenmasse von etwa 20 Gew.-% eingeengt. Anschließend erfolgte Sprühtrocknung der eingeengten Fermentationsbrühe unter Verwendung eines Production Minor^{™} Spray Dryer (GEA NIRO) bei einer Einlasstemperatur der Trocknungsluft von 340°C. Durch Sprühtrocknung wurde so ein Puder mit einer Trockenmasse von mehr als 95 Gew.-% erhalten.

Zur Bestimmung des Sulfat-Gehalts der erhaltenen Biomasse wurde der Schwefel-Gehalt der Biomasse gemäß DIN ISO 11885 bestimmt. Hierzu wurde ein Aliquot der Biomasse zunächst mit Salpetersäure und Wasserstoffperoxid bei 240°C unter Druck aufgeschlossen. Der ermittelte Schwefelgehalt lag bei 11 g/kg Biomasse, was einem Sulfat-Gehalt von 33 g/kg Biomasse entspricht.

### Beispiel 2: Herstellung der Futtermittel

Es wurden durch Extrusion jeweils Futtermittel hergestellt, die, bezogen auf die Trockenmasse, 42,5 Gew.-% Gesamtprotein und 24 Gew.-% Gesamtlipid enthalten sowie eine Pellet-Größe von 3 mm aufweisen.

Es wurden insgesamt drei verschiedene Futtermittel-Rezepturen hergestellt (Diät 1, 2 und 3). Die Kontroll-Rezeptur "Diät 1" enthielt 11,0 Gew.-% Fischöl. In der Rezeptur "Diät 2" wurde das Fischöl teilweise (ca. 50 %) durch Aurantiochytrien-Biomasse ersetzt, indem 9,1 Gew.-% Biomasse zugefügt wurden und dafür die Menge an Fischöl auf 5,5 Gew.-% reduziert wurde. In der Rezeptur "Diät 3" wurde das Fischöl vollständig durch Aurantiochytrien-Biomasse ersetzt, indem 16 Gew.-% Biomasse zugegeben wurden und gleichzeitig die Menge an Rapsöl von 8,2 auf 9,9 Gew.-% erhöht wurde. Differenzen im Gesamtgewicht wurden durch die Menge an zugesetztem Weizen ausgeglichen.

Die einzelnen Bestandteile des Futtermittels sind in der folgenden Tabelle dargestellt.

**Tabelle 1: Bei der Anzucht verwendete Rezepturen**

| **Komponenten (g kg⁻¹)** | **Diät 1** | **Diät 2** | **Diät 3** |
|---|---|---|---|
| Aurantiochytrim-Biomasse | 0,0 | 91,6 | 160,0 |
| SPC | 229,0 | 229,0 | 229,0 |
| Fischmehl | 150,0 | 150,0 | 150,0 |
| Weizen | 147,6 | 111,0 | 80,5 |
| Fischöl | 110,0 | 55,0 | 0,0 |
| Weizen gluten | 100,0 | 100,0 | 100,0 |
| Erbsenprotein-Konzentrat | 100,0 | 100,0 | 100,0 |
| Rapsöl | 82,0 | 82,0 | 99,1 |
| Mononatriumphosphat | 20,0 | 20,0 | 20,0 |
| Vitamin-Mischung | 20,0 | 20,0 | 20,0 |
| Sojalecithin | 10,0 | 10,0 | 10,0 |
| L-Lysin (50 Gew.-%) | 10,0 | 10,0 | 10,0 |
| Betafine | 9,4 | 9,4 | 9,4 |
| Mineralien-Mischung | 5,2 | 5,2 | 5,2 |
| L-Histidin (98 Gew.-%) | 4,2 | 4,2 | 4,2 |
| DL-Methionin (99 Gew.-%) | 2,0 | 2,0 | 2,0 |
| Carop. Pink (10 Gew.-%) | 0,50 | 0,50 | 0,50 |
| Yttriumoxid | 0,10 | 0,10 | 0,10 |

Die einzelnen Komponenten wurden - mit Ausnahme der Öle - innig miteinander vermischt und anschließend unter Verwendung eines Doppelschnecken-Extruders (Wenger TX 52, Wenger, USA) durch Anwendung einer Austrittsdüse mit einem Durchmesser von 2 mm ein Extrudat hergestellt. Die Extrudate wurden ca. 1 Stunde in einem Karussell-Trockner (Paul Klöckner, Verfahrenstechnik GmbH, Deutschland) bei 65°C auf einen Wassergehalt von 7 bis 8 Gew.-% getrocknet. Anschließend wurden die Extrudate über Nacht bei Raumtemperatur getrocknet, bevor die Öle durch Vakuum-Beschichtung (Dinnissen, Sevenum, Niederlande) aufgetragen wurden.

### Beispiel 3: Fütterungsexperimente

Zur Durchführung der Fütterungsexperimente wurden jeweils drei Behälter, die junge Lachse mit einem Gewicht von durchschnittlich 83,6 g bei einem Gesamtgewicht an Lachs von 4 kg pro Behälter enthielten, mit jeder dieser Rezepturen für insgesamt 12 Wochen gefüttert.

Das Gesamtgewicht an Lachs pro Behälter nahm in dieser Zeit von 4 kg auf 15-17 kg pro Behälter zu. Die Fische konsumierten hierbei 8 bis 11 kg Futter pro Tank, was einer Futter-Konversionsrate (FCR) von 0,8 bis 0,9 kg Futter pro kg Fisch entspricht.

Die Ergebnisse der Fütterungsexperimente sind in der nachfolgenden Tabelle dargestellt.

**Tabelle 2: Gewichtszuwachs der Fische in Abhängigkeit von der Diät**

| Diät | Endgewicht [g] |
|---|---|
| 1 | 331 |
| 2 | 362 |
| 3 | 339 |

Insgesamt wurde festgestellt, dass sowohl bei vollständigem als auch bei teilweisem Ersatz des Fischöls durch die Aurantiochytrien-Biomasse eine Steigerung des Wachstums der Lachse erzielt werden konnte.

Interessanterweise wurde bei teilweisem Ersatz des Fischöls durch die Aurantiochytrien-Biomasse ein höheres Wachstum der Lachse erzielt als bei vollständigem Ersatz durch die Aurantiochytrien-Biomasse.

Es wurde hierbei festgestellt, dass die Fische, die mit der Kontroll-Rezeptur Diät 1 gefüttert wurden, mit einem Endgewicht von durchschnittlich 331 g ein deutlich geringeres Endgewicht aufwiesen als die Fische, die mit den Rezepturen Diät 1 oder 2 gefüttert wurden. Am besten schnitten hierbei die Fische ab, die mit der Rezeptur Diät 2 gefüttert wurden: Sie erreichten ein deutlich erhöhtes Endgewicht von durchschnittlich 362 g.

### Beispiel 4: Fettsäureverwertung durch den Fisch

Zur Ermittlung der Fettsäureverwertung erfolgte der Lipidnachweis unter Verwendung der Bligh & Dryer-Extraktionsmethode und anschließender Fettsäureanalyse gemäß AOCS Ce 1b-89. Es wurden sowohl Muskel-Proben als auch Gesamt-Lachsproben analysiert. Es wurden hierbei die in den folgenden Tabellen dargestellten Ergebnisse erhalten (angegeben ist jeweils die Menge an ermittelten Fetten am Start bzw. nach Ende der Diät in Gramm jeweils in Bezug auf 100 g Gesamtfett).

**Tabelle 3: Fettsäureprofile von Lachsmuskel-Proben in Abhängigkeit von der Diät**

| Diät | PUFAs | Omega-3-Fettsäuren | DHA |
|---|---|---|---|
| Start | 41,6 | 32,7 | 22,1 |
| 1 | 31,8 | 19,0 | 10,1 |
| 2 | 35,3 | 21,7 | 14,2 |
| 3 | 38,0 | 22,8 | 16,4 |

**Tabelle 4: Fettsäureprofile von Gesamtlachs-Proben in Abhängigkeit von der Diät**

| Diät | PUFAs | Omega-3-Fettsäuren | DHA |
|---|---|---|---|
| Start | 32,5 | 22,4 | 12,5 |
| 1 | 29,9 | 17,2 | 9,0 |
| 2 | 32,6 | 18,8 | 11,5 |
| 3 | 35,2 | 19,6 | 13,1 |

Es ist zu beobachten, dass bereits bei teilweisem Ersatz des Fischöls durch die Aurantiochytrien-Biomasse eine deutliche Steigerung des Gehalts an PUFAs, omega-3-Fettsäuren und DHA erreicht werden konnte. Bei vollständigem Ersatz des Fischöls durch die Aurantiochytrien-Biomasse fällt die Steigerung des Gehalts an PUFAs entsprechend höher aus.

### Beispiel 6: Bestimmung des Fettgehalts der Lachsleber

Jeweils 3 junge Lachse wurden für jeweils 9 Wochen mit den unterschiedlichen Rezepturen Diät 1, 2 und 3 gefüttert und anschließend zur Bestimmung des Fettgehalts die Leber der Lachse entnommen. Die Fettextraktion erfolgte gemäß der Methode von Folch (1957; J. Biol. Chem., 226 (1), 497-509). Der Fettgehalt wurde anschließend durch eine gravimetrische Methode bestimmt.

Es stellte sich heraus, dass aufgrund der Anwesenheit der Biomasse im Vergleich zur Fütterung ohne Biomasse der Fettgehalt in der Leber von 8 Gew.-% signifikant auf 4-5 Gew.-% reduziert werden konnte.

Die Anlagerung von Fett in der Leber gilt als ein Anzeichen für ein Ungleichgewicht des Nahrungsstoffwechsels und insbesondere auch als Hinweis auf oxidativen Stress. Die deutliche Reduktion des Fettanteils in der Leber ist somit ein deutlicher Hinweis für die Reduktion von Stress und somit für die Verbesserung des Gesundheitszustands der Lachse.

## Patentansprüche

1. Verfahren zur Herstellung eines Futtermittels, **dadurch gekennzeichnet, dass** bei der Herstellung Öl mariner Tiere in einer Menge von 1 bis 12 Gew.-%, eine Labyrinthulea-Biomasse, bezogen auf die Trockenmasse, in einer Menge von 2 bis 20 Gew.-% sowie Mehl mariner Tiere, bezogen auf die Trockenmasse, in einer Menge von 5 bis 25 Gew.-% eingesetzt werden.

2. Verfahren gemäß Anspruch 1, **dadurch gekennzeichnet, dass** die Labyrinthulea-Zellen ausgewählt sind aus der Familie der Thraustochytriaceae, besonders bevorzugt aus den Gattungen Thraustochytrium, Schizochytrium, Aurantiochytrium, Oblongichytrium und Ulkenia, vor allem aus der Spezies Aurantiochytrium limacinum.

3. Verfahren nach einem der vorhergehenden Ansprüche, **dadurch gekennzeichnet, dass** die Biomasse, bezogen auf die Trockenmasse, in einer Menge von 3 bis 18 Gew.-%, insbesondere 5 bis 15 Gew.-%, vor allem 7 bis 11 Gew.-%, eingesetzt wird.

4. Verfahren nach einem der Ansprüche 1 bis 3, **dadurch gekennzeichnet, dass** das Öl mariner Tiere und die Labyrinthulea-Biomasse, bezogen auf die Trockenmasse, im Gewichtsverhältnis von 2:1 bis 1:5, insbesondere 3:2 bis 1:4, besonders bevorzugt 1:1 bis 1:3, vor allem im Verhältnis von etwa 2:3, eingesetzt werden.

5. Verfahren nach einem der vorhergehenden Ansprüche, **dadurch gekennzeichnet, dass** Öl mariner Tiere, insbesondere Fischöl, in einer Menge von 2 bis 8 Gew.-%, besonders bevorzugt 3 bis 7 Gew.-%, eingesetzt wird.

6. Verfahren nach einem der vorhergehenden Ansprüche, **dadurch gekennzeichnet, dass** das resultierende Futtermittel einen Gesamt-Protein-Gehalt von 30 bis 60 Gew.-%, vorzugsweise 35 bis 55 Gew.-%, insbesondere 40 bis 50 Gew.-%, und einen Gesamt-Fett-Gehalt von 15 bis 35 Gew.-%, vorzugsweise 18 bis 32 Gew.-%, insbesondere 20 bis 30 Gew.-%, vor allem 22 bis 28 Gew.-%, aufweist.

7. Verfahren nach einem der vorhergehenden Ansprüche, **dadurch gekennzeichnet, dass** Mehl von marinen Tieren, vorzugsweise Fischmehl, in einer Menge von 10 bis 20 Gew.-%, besonders bevorzugt 12 bis 18 Gew.-%, bezogen auf die Trockenmasse, eingesetzt wird.

8. Verfahren nach einem der vorhergehenden Ansprüche, **dadurch gekennzeichnet, dass** das resultierende Futtermittel omega-3-Fettsäuren in einer Gesamtmenge von 0,5 bis 5,0 Gew.-%, vorzugsweise 2,0 bis 4,0 Gew.-%, und DHA in einer Menge von 0,25 bis 3,0 Gew.-%, vorzugsweise 1,0 bis 2,5 Gew.-%, enthält.

## Claims

1. Process for producing a feedstuff, **characterized in that** the production involves the use of oil from marine animals in an amount of 1 to 12% by weight, a Labyrinthulea biomass, based on the dry mass, in an amount of 2 to 20% by weight and meal from marine animals, based on the dry mass, in an amount of 5 to 25% by weight.

2. Process according to Claim 1, **characterized in that** the Labyrinthulea cells are selected from the family of the Thraustochytriaceae, especially preferably from the genera Thraustochytrium, Schizochytrium, Aurantiochytrium, Oblongichytrium and Ulkenia, above all from the species Aurantiochytrium limacinum.

3. Process according to either of the preceding claims, **characterized in that** the biomass, based on the dry biomass, is used in an amount of 3 to 18% by weight, in particular 5 to 15% by weight, above all 7 to 11% by weight.

4. Process according to any of Claims 1 to 3, **characterized in that** the oil from marine animals and the Labyrinthulea biomass, based on the dry mass, are used in a weight ratio of 2:1 to 1:5, in particular 3:2 to 1:4, especially preferably 1:1 to 1:3, above all in a ratio of about 2:3.

5. Process according to any of the preceding claims, **characterized in that** oil from marine animals, in particular fish oil, is used in an amount of 2 to 8% by weight, especially preferably 3 to 7% by weight.

6. Process according to any of the preceding claims, **characterized in that** the resultant feedstuff has a total protein content of 30 to 60% by weight, preferably 35 to 55% by weight, in particular 40 to 50% by weight, and a total fat content of 15 to 35% by weight, preferably 18 to 32% by weight, in particular 20 to 30% by weight, above all 22 to 28% by weight.

7. Process according to any of the preceding claims, **characterized in that** meal from marine animals, preferably fish meal, is used in an amount of 10 to 20% by weight, especially preferably 12 to 18% by weight, based on the dry mass.

8. Process according to any of the preceding claims, **characterized in that** the resultant feedstuff contains omega-3 fatty acids in a total amount of 0.5 to 5.0% by weight, preferably 2.0 to 4.0% by weight, and DHA in an amount of 0.25 to 3.0% by weight, preferably 1.0 to 2.5% by weight.

## Revendications

1. Procédé pour la préparation d'un aliment pour animaux, **caractérisé en ce que** dans la préparation on utilise de l'huile d'animaux marins en une quantité de 1 à 12 % en poids, une biomasse de Labyrinthulea, par rapport à la masse sèche, en une quantité de 2 à 20 % en poids ainsi que de la farine d'animaux marins, par rapport à la masse sèche, en une quantité de 5 à 25 % en poids.

2. Procédé selon la revendication 1, **caractérisé en ce que** les cellules de *Labyrinthulea* sont choisies dans la famille des *Thraustochytriaceae,* de façon particulièrement préférée dans les genres *Thraustochytrium, Schizochytrium, Aurantiochytrium, Oblongichytrium* et *Ulkenia,* tout particulièrement dans l'espèce *Aurantiochytrium limacinum.*

3. Procédé selon l'une quelconque des revendications précédentes, **caractérisé en ce qu'**on utilise la biomasse, par rapport à la masse sèche, en une quantité de 3 à 18 % en poids, en particulier 5 à 15 % en poids, tout particulièrement 7 à 11 % en poids.

4. Procédé selon l'une quelconque des revendications 1 à 3, **caractérisé en ce qu'**on utilise l'huile d'animaux marins et la biomasse de *Labyrinthulea,* par rapport à la masse sèche, en un rapport en poids de 2:1 à 1:5, en particulier 3:2 à 1:4, de façon particulièrement préférée 1:1 à 1:3, tout particulièrement en le rapport d'environ 2:3.

5. Procédé selon l'une quelconque des revendications précédentes, **caractérisé en ce qu'**on utilise de l'huile d'animaux marins, en particulier de l'huile de poisson, en une quantité de 2 à 8 % en poids, de façon particulièrement préférée 3 à 7 % en poids.

6. Procédé selon l'une quelconque des revendications précédentes, **caractérisé en ce que** l'aliment pour animaux résultant présente une teneur en protéines totales de 30 à 60 % en poids, de préférence 35 à 55 % en poids, en particulier 40 à 50 % en poids, et une teneur en matières grasses totales de 15 à 35 % en poids, de préférence 18 à 32 % en poids, en particulier 20 à 30 % en poids, tout particulièrement 22 à 28 % en poids.

7. Procédé selon l'une quelconque des revendications précédentes, **caractérisé en ce qu'**on utilise de la farine d'animaux marins, de préférence de la farine de poisson, en une quantité de 10 à 20 % en poids, de façon particulièrement préférée 12 à 18 % en poids, par rapport à la masse sèche.

8. Procédé selon l'une quelconque des revendications précédentes, **caractérisé en ce que** l'aliment pour animaux résultant contient des acides gras oméga-3 en une quantité totale de 0,5 à 5,0 % en poids, de préférence 2,0 à 4,0 % en poids, et du DHA en une quantité de 0,25 à 3,0 % en poids, de préférence 1,0 à 2,5 % en poids.
